# FASCICULE DE BREVET EUROPEEN

(11) **EP 0 366 536 B1**
(45) Date de publication et mention de la délivrance du brevet: **06.10.1993**
(21) Numéro de dépôt: 89402920.6
(22) Date de dépôt: 24.10.1989
(51) Int. Cl.: F02B 41/10

(54) **Moteur compound adapté**
Angepasste Verbundbrennkraftmaschine
Adapted compound engine

(30) Priorité: 28.10.1988 FR 8814113
(43) Date de publication de la demande: 02.05.1990
(73) Titulaire: RENAULT VEHICULES INDUSTRIELS Société Anonyme dite:, 69003 Lyon (FR)
(72) Inventeur: Bonnetain, Yves, F-69008 Lyon (FR)
(74) Mandataire: Ernst-Schonberg, Michel

(56) Documents cités:
- DE-A- 3 728 681
- GB-A- 2 080 432
- US-A- 3 513 929
- US-A- 4 694 654

## Description

La présente invention se rapporte à un moteur dit compound adapté du type récupérant de l'énergie sur le flux de gaz d'échappement, l'énergie ainsi récupérée servant à entraîner diverses machines auxiliaires.

Il est connu, notamment par le document US 4 694 654, de récupérer l'énergie contenue dans les gaz d'échappement d'un moteur à combustion en utilisant des turbines.

Toutefois, les dispositifs développés font fonctionner les turbines dans toute la plage de fonctionnement du moteur.

Suivant une particularité essentielle de l'invention, le moteur qui comporte une turbine montée sur une tubulure d'échappement, incorpore une vanne trois voies placée sur cette tubulure pour dériver tout ou partie du flux gazeux vers cette turbine avant de le diriger vers l'échappement.

La vanne trois voies étant pilotée pour dévier les gaz d'échappement vers la turbine uniquement dans le cas d'un fonctionnement du moteur à régime et charge élevés.

Cette conception permet d'améliorer le bilan énergétique global en récupérant de l'énergie sur les gaz d'échappement pour le seul besoin des énergies d'assistance, de sorte que le bilan global du moteur demeure toujours favorable.

D'autres particularités et avantages de l'invention ressortiront plus clairement de la description qui suit d'un mode de réalisation préféré, donné à titre d'exemple non limitatif, en référence aux dessins annexés dans lesquels :
- La figure 1 représente un croquis d'un moteur compound conventionnel,
- La figure 2 représente un diagramme puissance en fonction du régime, propre à ce moteur,
- La figure 3 représente un croquis d'un moteur suralimenté dont l'arbre moteur entraîne diverses machines d'assistance de bord,
- et la figure 4 représente un croquis d' un moteur compound adapté conforme à l'invention.

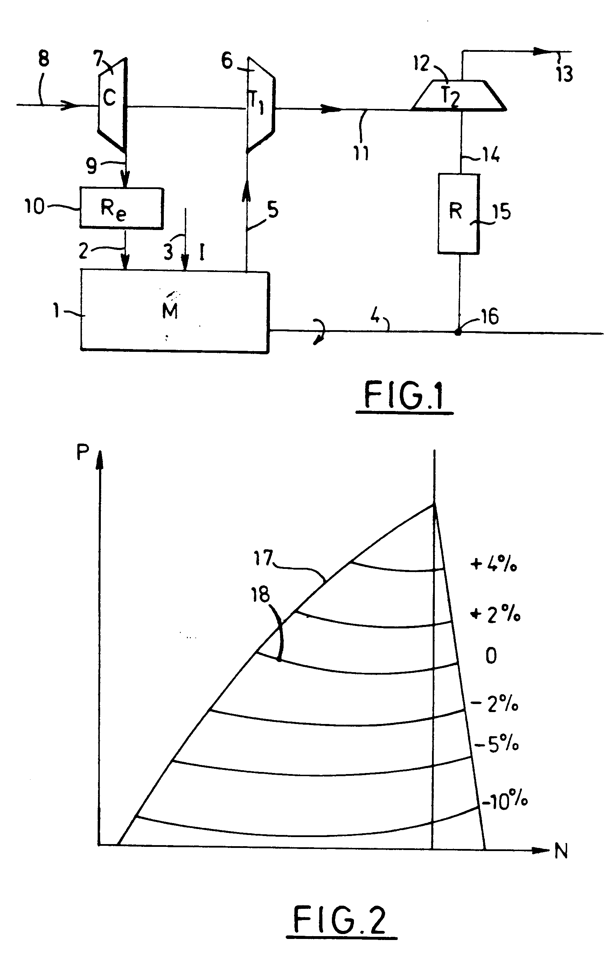

La figure 1 illustre un moteur compound traditionnel.

Un moteur thermique à combustion interne 1 est une machine qui transforme un comburant 2 et un carburant 3 en énergie mécanique recueillie sur un arbre tournant 4. Il produit de plus et entre autre chose, des gaz d'échappement 5 contenant une part importante de l'énergie introduite en 3. Une partie de cette énergie peut être récupérée sur une turbine 6 qui entraîne un compresseur 7. Celui-ci aspire l'air atmosphérique 8 et le comprime pour en gaver le moteur. L'air comprimé 9 peut éventuellement être refroidi dans un échangeur 10 pour abaisser les pressions dans le moteur pour un travail donné.

Le système de suralimentation 6 et 7 peut ou non exister, tout comme le refroidisseur 10.

Dans tous les cas, il reste sur le flux de gaz d'échappement 11, une quantité d'énergie plus ou moins importante.

Diverses solutions de récupération de cette énergie existent, et notamment le système dit compound. Il consiste en l'installation d'une turbine 12 en plein flux sur l'échappement 11. L'énergie récupérée en 12 est utilisée, pour entraîner diverses machines auxiliaires.

Ce dispositif permet de récupérer de l'énergie mais au prix d'une perte de charge qui compromet le fonctionnement de l'étage amont, c'est-à-dire le moteur s'il n'est pas suralimenté, et celui-ci et son turbo-compresseur dans le cas contraire.

Sur le diagramme puissance en fonction du régime représenté à la figure 2, la courbe de pleine charge 17 délimite la plage de fonctionnement possible du moteur. Les courbes d'iso-influence de la perte de charge du compound sur échappement 18, séparent les plages où sa présence est favorable et améliorent le rendement de celles où elle est défavorable et détériorent le rendement.

En général, l'influence du compound sur le rendement global est favorable aux régimes et aux charges élevées, et défavorable aux faibles charges et bas régimes. Si le véhicule qui est équipé d'un tel moteur dispose d'une puissance très supérieure à la puissance nécessaire au roulage, le moteur est fréquemment utilisé à faibles charges et le bilan général du compound est défavorable.

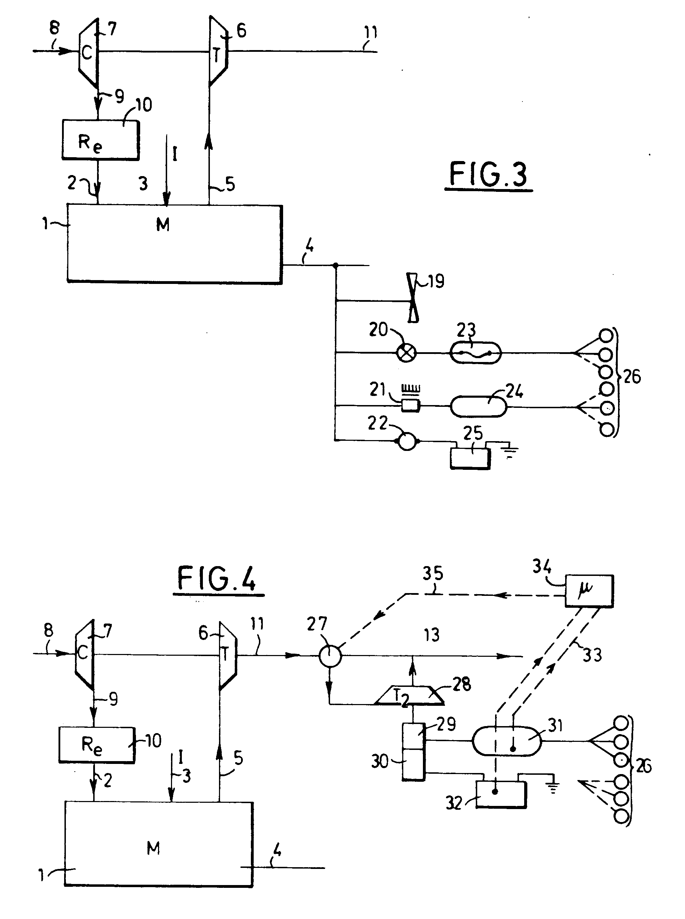

Un certain nombre de machines sont donc entraînées par l'arbre moteur 4 pour produire les énergies d'assistance de bord. Ce sont par exemple, comme l'illustre la figure 3, le ventilateur 19 de refroidissement, la pompe hydraulique 20 d'assistance de direction, le compresseur d'air 21 d'assistance de freinage, l'alternateur 22 d'alimentation des batteries, etc..., sans que cette liste d'assistance citée à titre d'exemple ne soit limitative.

Les différentes machines ainsi entraînées débitent, soit dans un radiateur, soit dans des accumulateurs hydrauliques ou électriques, soit dans des réservoirs sous pression. L' énergie peut alors être délivrée au moment opportun vers les machines 26 qui en ont besoin pour les différentes assistances de bord.

L'énergie puisée sur l'arbre 4 est noble et d'autant plus chère qu'elle est soustraite à faible charge à l'arbre moteur. Dans ces conditions, le rendement du moteur est au plus bas et un joule sur l'arbre moteur peut "coûter" 5 joules ou plus dans le réservoir de carburant.

Le bilan énergétique global peut donc être amélioré si, par un système compound, on récupère de l'énergie sur les gaz d'échappement pour le seul besoin des énergies d'assistance.

Pour éviter de tomber sur les difficultés soulevées par un système compound classique, on peut imaginer un compound adapté qui fonctionne comme suit, en référence à la figure 4 :

Une vanne 3 voies 27 est placée sur la tubulure d'échappement 11 et dérive une partie ou la totalité du flux vers une turbine 28 avant de le diriger vers l'échappement 13. La turbine 28 entraîne, directement ou par l'intermédiaire d'un réducteur de vitesse, un alternateur électrique 30 qui débite, lorsqu'il est excité, vers une batterie 32, et une pompe hydraulique ou un compresseur d'air 29 (ou les deux) qui débite ou (débitent) vers les accumulateurs ou réservoirs d'air 31.

Les machines d'assistance 26 sont alimentées normalement à partir de la batterie 32 et des accumulateurs d'air 31. Les états de charge de la batterie 32 et de pression des réservoirs 31 sont mesurés et les informations 33 transmises à un microprocesseur 34. Par une commande et un actionneur 35, il manoeuvre la vanne 27.

Le microprocesseur est programmé pour satisfaire aux diverses exigences qu'on impose au puisage d'énergie sur 11, ainsi on ne stocke l'énergie disponible pour les diverses autres assistances que lorsque le point de fonctionnement du moteur sur son diagramme d'utilisation (fig. 2) est dans la zone des gains.

Il va de soi qu'on pourra jouer sur la capacité des réserves (batteries, réservoirs, accumulateurs...). Plus ces capacités seront importantes, et plus le choix des séquences de puisage d'énergie sera aisé.

Différentes variantes peuvent être envisagées : à titre d'exemple :
- Seulement une machine entraînée par la turbine, au lieu de deux ou trois,
- Compresseur centrifuge mono-étagé aspirant en 9 entraîné par la turbine.
- Compresseur centrifuge bi-étagé aspirant à l'atmosphère,
- Décharge du réservoir 31 dans 9 lors d'une reprise à bas régime.

## Revendications

1. Moteur compound adapté du type comprenant une turbine (28) montée sur une tubulure d'échappement (11) pour récupérer de l'énergie, seulement destinée aux machines auxiliaires, caractérisé en ce qu'il incorpore une vanne trois voies (27) placée sur cette tubulure pour dériver tout ou partie du flux gazeux vers cette turbine avant de le diriger vers l'échappement (13) ; la vanne trois voies (27) étant pilotée pour dévier les gaz d'échappement vers la turbine (28) uniquement dans le cas d'un fonctionnement du moteur à régime et charge élevés, de sorte que le bilan global du moteur demeure favorable.

2. Moteur compound selon la revendication 1 caractérisé en ce que la turbine (28) entraîne au moins une machine auxiliaire (30 ; 29) par l'intermédiaire de moyens de transformation (30) et de stockage de l'énergie (32) et en ce que dans ladite plage de fonctionnement du moteur la vanne trois voies (27) est pilotée pour faire fonctionner la turbine (28) de façon à satisfaire aux besoins desdits moyens.

3. Moteur compound selon la revendication 2, caractérisé en ce que la turbine (28) entraîne un alternateur électrique (30) susceptible de débiter vers une batterie (32), et une pompe hydraulique ou un compresseur d'air (29) qui débite vers des accumulateurs d'air (31), cette batterie et ces accumulateurs d'air alimentant des machines d'assistance (26) ; les états de charge de la batterie (32) et de pression des accumulateurs d'air (31) sont mesurés et les informations (33) transmises à un microprocesseur (34) qui agit sur la vanne trois voies (27) par une commande et un actionneur (35).

## Claims

1. An adapted compound engine of the type comprising a turbine (28) mounted on an exhaust pipe (11) in order to recover energy solely for the purposes of auxiliary machinery, characterized in that it incorporates a three-way valve (27) disposed on this pipe in order to divert all or part of the gaseous flow to this turbine before directing it to the exhaust (13) and in that the three-way valve (27) is driven so as to divert the exhaust gases to the turbine (28) solely when the engine is operating at high speed and high load such that the overall balance of the engine remains favourable.

2. A compound engine as claimed in claim 1, characterized in that the turbine (28) drives at least one auxiliary machine (30, 29) via means converting (30) and storing (32) energy and in that in this operating range of the engine the three-way valve (27) is driven in order to cause the turbine (28) to operate in such a way as to satisfy the requirements of these means.

3. A compound engine as claimed in claim 2, characterized in that the turbine (28) drives an electric alternator (30) able to discharge to a battery (32), and a hydraulic pump or an air compressor (29) which discharges to air accumulators (31), the battery and the air accumulators supplying auxiliary machines (26) and in that the load conditions of the battery (32) and the pressure conditions of the air accumulators (31) are measured and the information is supplied to a microprocessor (34) which acts on the three-way valve (27) via a control and an actuator (35).

## Patentansprüche

1. Angepaßte Verbundbrennkraftmaschine, die eine Turbine (28) aufweist, welche in eine Auspuffrohrleitung (11) eingesetzt ist zur Wiedergewinnung von Energie, die ausschließlich für zusätzliche Aggregate bestimmt ist, dadurch gekennzeichnet, daß sie ein Drei-Wege-Ventil (27) aufweist, das in diese Rohrleitung eingesetzt ist, um den Gasstrom ganz oder teilweise zu dieser Turbine abzuzweigen, bevor er zum Auspuff (13) geleitet wird; das Drei-Wege-Ventil (27) wird derart angesteuert, daß die Auspuffgase zur Turbine (28) nur bei erhöhter Motordrehzahl und erhöhter Last abgezweigt werden, so daß die Gesamtbilanz des Motors im vorteilhaften Bereich verbleibt.

2. Verbundbrennkraftmaschine nach Anspruch 1, dadurch gekennzeichnet, daß die Turbine (28) wenigstens ein Hilfsaggregat (30; 29) antreibt, mittels einer Anordnung zur Übertragung (30) und Speicherung von Energie (32), und daß in diesem Betriebsbereich der Brennkraftmaschine das Drei-Wege-Ventil (27) derart angesteuert wird, daß die Turbine (28) funktioniert und dabei die Bedingungen der Anordnungen erfüllt.

3. Verbundkraftmaschine nach Anspruch 2, dadurch gekennzeichnet, daß die Turbine (28) eine elektrische Lichtmaschine (30) antreibt, die eine Batterie (32) speist und eine hydraulische Pumpe oder einen Luftkompressor (29), der Luftspeicher (31) speist, wobei diese Batterie und diese Luftspeicher Hilfsaggregate (26) speisen; die Ladezustände der Batterie (32) und die Druckzustände der Luftspeicher (31) werden gemessen und diese Informationen (33) einem Mikroprozessor (34) zugeführt, der auf das Drei-Wege-Ventil (27) zur Steuerung einer Betätigungsanordnung (35) einwirkt.
